# EUROPEAN PATENT SPECIFICATION

(11) **EP 2 058 118 B1**
(45) Date of publication and mention of the grant of the patent: **17.03.2010**
(21) Application number: 08168587.7
(22) Date of filing: 07.11.2008
(51) Int. Cl.: B32B 3/30, G21B 1/13

(54) **Carbon-based composite member and producing method thereof**
Verbundelement auf Kohlenstoffbasis und Herstellungsverfahren dafür
Élément composite à base de carbone et son procédé de production

(30) Priority: 09.11.2007 JP 2007292470
(43) Date of publication of application: 13.05.2009
(73) Proprietor: Ibiden Co., Ltd., Ogaki-shi, Gifu 503-8604 (JP)
(72) Inventor: Takagi, Takashi, Ogaki, Gifu (JP); Yasuda, Masahiro, Ogaki, Gifu (JP)
(74) Representative: HOFFMANN EITLE

(56) References cited:
- WO-A-2005/114079
- GB-A- 1 389 367
- US-A- 5 390 217
- US-A- 5 586 152
- US-A1- 2005 254 543

## Description

### BACKGROUND OF THE INVENTION

### Field of the Invention

The present invention relates to a carbon-based composite member suitable for use as a graphite member or the like on the inside of an apparatus or furnace such as a silicon single crystal pulling-up apparatus, a high-temperature treatment furnace, a nuclear fusion reactor, a nuclear reactor or a hot press apparatus.

### Description of the Related Art

A graphite material has a sublimation point of about 3,600°C, so that it is widely used as a member or the like on the inside of an apparatus or furnace such as a silicon single crystal pulling-up apparatus, a high-temperature treatment furnace, a nuclear fusion reactor, a nuclear reactor or a hot press apparatus that becomes a non-oxidative atmosphere and a high-temperature environment.

Members used for these applications reach extremely high temperatures, so that they are highly susceptible to deformation caused by thermal expansion. If an apparatus or furnace is created by placing a member made of the graphite material in the high-temperature area and a member made of a different material (i.e. metal, ceramic or the like) on the outside thereof, a gap will be formed due to the difference in thermal expansion between the graphite member and the non-graphite member. Further, even when the parts of the apparatus or furnace consist only of a plurality of graphite members with the same thermal expansion coefficient, the material may deform unevenly due to exposure to varying temperatures, which leads to the development of a gap. On account of this gap, the now uncovered non-graphite member may be exposed to high temperatures. If gap occurs between the graphite member and the non-graphite member, thermal resistance from the graphite member to the non-graphite member might increase to such an extend that the graphite member becomes abnormally overheated If the graphite member and the non-graphite member are restrained, thermal stress may occur depending on the selection of temperature or material. Accordingly, the graphite member and the non-graplhite member might be arranged with a previously provided gap, and thermal resistance to the non-graphite member is liable to increase from the step before the temperature is applied, which might expose the non-graphite member to high temperatures.

In order to prevent the development of a gap through variations in thermal expansion or thermal stress, as described in JP-UM-A-62-41446 or JP-A-2000-88985, a technique has been used involving a carbon-based sheet such as one produced when carbon fibers are made into a sheet or when an expanded graphite sheet is attached between graphite members or between a graphite member and a non-graphite member.

These carbon-based sheets are prone to wrinkling during the mounting process, which leads to irregularities in thickness. This has led to a widespread use of carbon-based composite members in which a heat-resistant adhesive is used to attach the carbon-based sheet to the graphite member in order to promote the adherence of the carbon-based sheet to the gap between the graphite member and the non-graphite member.

### SUMMARY OF THE INVENTION

However, when the graphite member is exchanged in the carbon-based composite member in which the carbon-based sheet is adhered to the graphite member with the heat-resistant adhesive as described above, a part of the carbon-based sheet that has deteriorated through use might separate and fall to the bottom of the apparatus, making it difficult to retrieve. Due to the recent growth in size and complexity of the apparatus, it is no longer possible to easily disassemble and clean the apparatus, which has made it desirable to obtain a carbon-based composite member that will not separate even after use.

The present invention addresses these problems, and an object of the present invention is to provide a carbon-based composite member comprising a graphite substrate and a carbon-based sheet adhered to a surface of the graphite substrate with a heat-resistant adhesive, which decreases the likelihood of separation, breakage or the like of the carbon-based sheet during the carbonization stage of the adhesive when the carbon-based composite member undergoes heat treatment during production or when it is exposed to a high-temperature environment during use.

An aspect of the present invention provides a carbon-based composite member comprising a graphite substrate and a carbon-based sheet adhered to a surface of the graphite substrate with a heat-resistant adhesive, wherein at least one of the slits and grooves are formed on the carbon-based sheet.

According to the configuration as described above, at least one of the slits or grooves are formed on a surface of the carbon-based sheet, so that even if thermal expansion varies between the graphite substrate and the carbon-based sheet, this can be absorbed by the slits or grooves. Therefore, a carbon-based composite member is provided which is decreased when the carbon-based sheet is separated from the graphite substrate or when the carbon-based sheet is cut, broken or the like, even in a high-temperature environment, and which can maintain a good adhesive state.

### BRIEF DESCRIPTION OF THE DRAWINGS

The above and other aspects of the present invention will become more apparent and more readily appreciated from the following description of the exemplary embodiments of the present invention as well as the attached drawings, in which:

Fig. 1 is a schematic view showing an embodiment of a carbon-based composite member according to the present invention;

Fig. 2A is a plan view showing a carbon-based sheet in which slits or grooves have been added in a lattice pattern, and Fig. 2B is a plan view showing a carbon-based sheet in which slits or grooves have been added in a plain-woven pattern;

Fig. 3 is a plan view showing a carbon-based sheet according to the embodiment;

Figs. 4A to 4C are plan views showing other carbon-based sheets according to the embodiment;

Fig. 5 is a partially enlarged depiction of a carbon-based sheet according to the embodiment;

Fig. 6 provides a use example of a carbon-based sheet according to the embodiment;

Fig. 7 shows a carbon-based composite member following the evaluation test in Example 1;

Fig. 8 shows a carbon-based composite member following treatment at 2,000°C for 3 hours in Comparative Example 1; and

Fig. 9 shows a carbon-based composite member following the evaluation test in Comparative Example 2.

### DETAILED DESCRIPTION

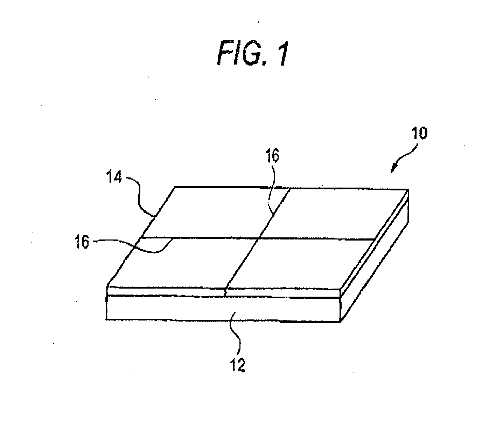

Exemplary embodiments of carbon-based composite members according to the present invention will be described below with reference to the drawings. Fig. 1 provides a schematic view of a carbon-based composite member 10 according to this embodiment. The carbon-based composite member 10 shown in Fig. 1 is obtained by joining a carbon-based sheet 14 to a surface of a graphite substrate 12 with a heat-resistant adhesive.

For the graphite substrate 12, a graphite material can be selected of the type generally used for a member made of graphite constituting the inside of an apparatus or furnace such as a silicon single crystal pulling-up apparatus, a high-temperature treatment furnace, a nuclear fusion reactor, a nuclear reactor or a hot press apparatus.

Such graphite materials may include a graphite material produced by a method such as injection molding, an isotropic graphite material produced by pulverizing a raw material to tens of microns or less and using a method such as a cold isostatic press (CIP), and the like.

The carbon-based sheet 14 may be any sheet, as long as the sheet is formed by an elastic carbon. Specific examples are an expanded graphite sheet, a fibrous sheet obtained by sheet making or weaving of carbon fibers or graphite fibers, a fibrous sheet obtained by impregnating the above-mentioned fibrous sheet with a phenol resin or the like, followed by curing and burning, or the like. It is preferable to use a carbon-based sheet that has a thermal expansion coefficient in a plane direction smaller than that of the graphite substrate.

Of these sheets, the expanded graphite sheet is inexpensive, has appropriate elasticity, and has high thermal conductivity because natural graphite is used as a raw material, which means that it is suitable for use as a carbon-based sheet, A commercially available sheet can be used for the expanded graphite sheet, and examples thereof include the expanded graphite sheet (trade name: Expanded Graphite Sheet TG-411 or GTA) manufactured by GrafTech International Ltd.

It is noted that at least one of the slits and grooves is formed on the carbon-based sheet 14. The term "slit" as used for this application is defined as a narrow cut that passes through both sides of the carbon-based sheet. The term "groove" is defined as a narrow depression found only on either the front or back side of the carbon-based sheet without passing through to the other side of the sheet.

As described above, in the carbon-based composite member comprising the graphite substrate and the carbon-based sheet adhered to the graphite substrate, a part of the carbon-based sheet may separate and drop off.

This may happen for the following reason. The a axis of a crystal tends to be aligned in the fiber direction or in the plane direction of a graphite fiber or graphite sheet, so that a graphite sheet produced using carbon fibers or graphite fibers as a raw material or an expanded graphite produced by expanding natural graphite is strongly aligned in a plane direction. Accordingly, the thermal expansion coefficient in the plane direction of the graphite sheet is liable to become smaller than the thermal expansion coefficient in a plane direction (about 4×10⁻⁶/K) of a graphite member produced by a method such as a cold isostatic press (CIP). In particular, the thermal expansion coefficient in the plane direction of the expanded graphite sheet is about
- 0.4×10⁻⁶/K, which is very small when compared to the thermal expansion coefficient of the graphite member to which the graphite sheet is adhered. From such a difference in the thermal expansion coefficient, it is conceivable that when tension is applied in a layer direction by heating, parts of the carbon-based sheet may be cut or broken off due to shear force and these fragments of the carbon-based sheet may drop down.

Such a phenomenon not only occurs in a furnace or apparatus in which a carbon-based composite member is used, but also in a production stage of the carbon-based composite member in which similar heat treatment is carried out.

In this embodiment, at least one of the slits and grooves are formed on the carbon-based sheet 14. The tension generated on a surface of the carbon-based sheet can be absorbed by forming at least one of the slits or grooves on the carbon-based sheet. Even if there is a difference in thermal expansion between the graphite substrate and the carbon-based sheet, the difference in thermal expansion can be absorbed by the slits or grooves, which prevents separation, cutting, breakage or the like of the carbon-based sheet.

Although the slits or grooves may be in a lattice form, a hexagonal form or the like, the lattice form as shown in Fig. 1 is preferred because of its case of processability.

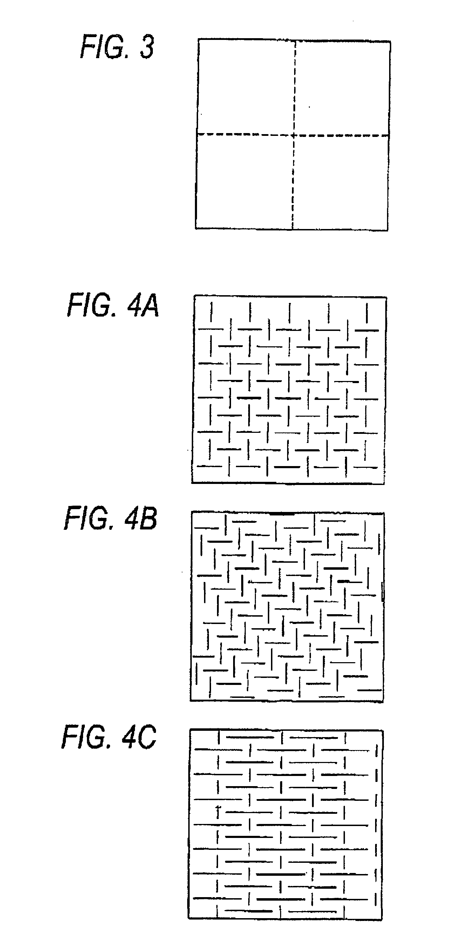

The slits or grooves may be formed by perforation as shown in Fig. 3. As for the perforation distance, the slits or grooves are desirably constituted to such a degree that the sheet breaks along the perforation when tension is applied in a direction perpendicular to the perforation, for example, approximately at a ratio of 30% or more based on the entire length of the perforated portion.

As for the shape of the slits or grooves, they may also be formed in a plain-woven form, a twill form and a satin weave form as shown in Figs. 4A to 4C, respectively. In these methods, the slits are formed on a single sheet, so that it is easy to form the slits before adhesion to the graphite substrate.

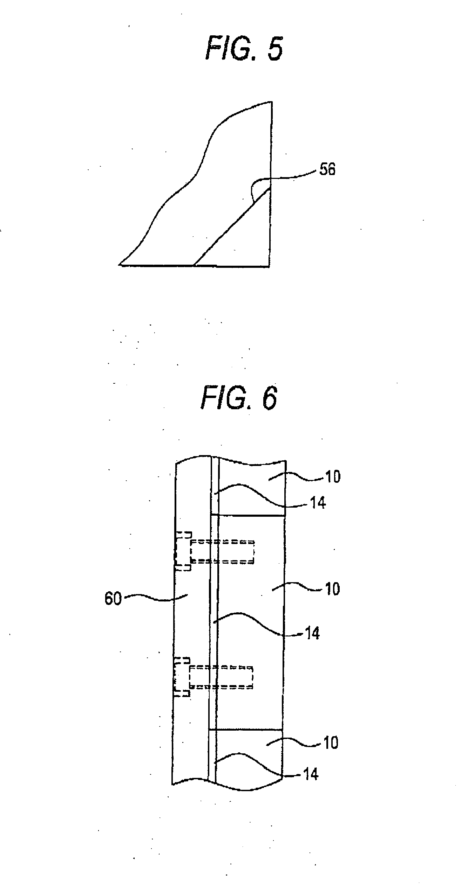

Furthermore, a slit (or a groove) 56 may be diagonally formed so that a corner portion of the carbon-based sheet becomes triangular, as shown in Fig. 5. The dropping-off and the like of the corner portion can be prevented by diagonally forming the slit in the corner portion.

The slits or grooves are preferably formed so that there is no long straight line intersecting the slits or grooves on the carbon-based sheet For example, the maximum linear distance between the slits or grooves is preferably 80 mm or less, and more preferably 72 mm or less. Since the maximum linear distance between the slits or grooves is 80 mm or less, separation of the carbon based sheet becomes less likely,

The term "the linear distance between the slits or grooves" as used herein means the length of a straight line that connects two slits and grooves with each other without intersecting another slit or groove. That is, when a point on an arbitrary slit or groove is taken as point A and a point on another arbitrary slit or groove is taken as point B, "the linear distance between the slits or grooves" means the length of segment AB at the time when no other slit or groove intercepts segment AB.

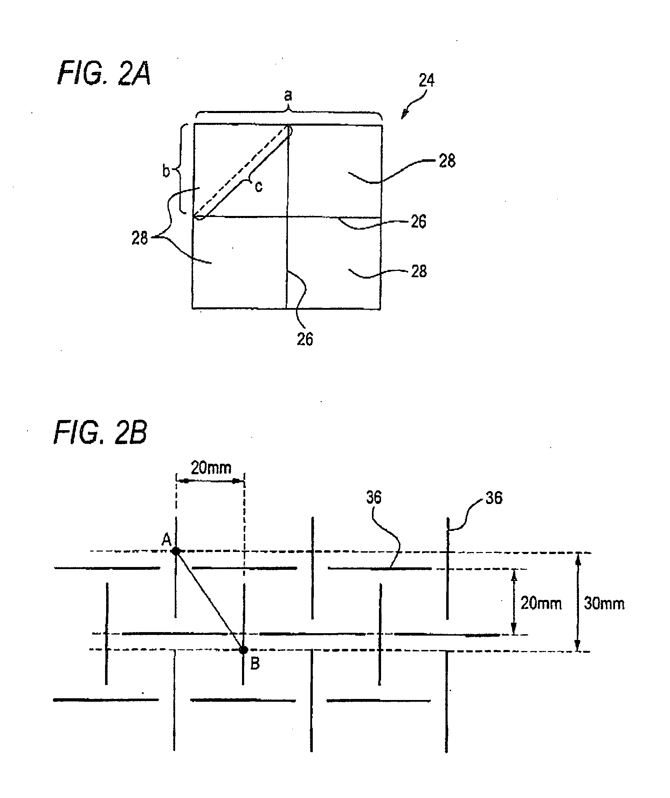

This point will be described in more detail using the configuration (lattice-formed slits or grooves) shown in Fig. 2A as an example. Fig. 2A is a plan view of a carbon-based sheet 24 in which slits or grooves have been added in a lattice form. This carbon-based sheet 24 is a square, 100 mm on each side. On this carbon-based sheet 24, the slits or grooves 26 have been added in a lattice form, thereby dividing the carbon-based sheet 24 into a divided sheet 28 of four squares. On this carbon-based sheet 24, the maximum linear distance between the slits or grooves 26 (the maximum length of a straight line connecting the slits or grooves with each other without intersecting another slit or groove) is the length c of a diagonal line of the divided sheet 28. Length b of a side of the divided sheet 28 is 50 mm, so that length c of the diagonal line is about 71 mm. Accordingly, in this case the maximum linear distance between the slits or grooves is 80 mm or less.

Further, Fig. 2B shows slits or grooves aligned in a plain-woven form. In Fig. 2B, reference numeral 36 is used to indicate the slits or grooves. The broken lines are additional lines that indicate the length of the slit or groove and the distance between them.

In the case of the plain-woven form in Fig. 2B, the maximum linear distance between the slits or grooves corresponds to the length of a straight line connecting point A and point B, When the distance between a vertical line and a horizontal line constituting the slits or grooves 36 is defined to be, for example, 5 mm, and the distance between the vertical lines or horizontal lines is defined to be 20 mm, as shown in Fig. 2B, the length of the straight line connecting point A and point B is √(20²+30²)≒36mm. In this case, the maximum linear distance between the slits or grooves is also 80 mm or less.

As described above, in the case of the plain-woven form, the twill form, the satin weave form and the like, the maximum linear distance between the slits or grooves can be defined to be 80 mm or less when fine slits or grooves are added.

The thickness of the carbon-based sheet does not have a specified limit. However, when it is used as a wall material for the above-mentioned apparatus or furnace, the thickness is preferably 0.1 mm or more to ensure proper elasticity. Further, the upper limit thereof is preferably 3 mm or less, because a sheet that is too thick increases thermal resistance.

If the carbon-based composite member according to this embodiment is used as a constituent member of the silicon single crystal pulling-up apparatus, the nuclear fusion reactor, the nuclear reactor or the like, it is preferable that the graphite substrate and the carbon-based sheet demonstrate a high degree of purity, i.e. most impurities have been removed.

The amount of impurities in the graphite substrate and the carbon-based sheet is preferably 20 ppm or less. In particular, if the graphite substrate and the carbon-based sheet are used as a constituent member of a nuclear reactor, the boron content of the graphite substrate and the carbon-based sheet is preferably 5 ppm or less, and more preferably 1 ppm or less.

The heat-resistant adhesive may be any adhesive, as long as it is a resin that can be carbonized by treating it with heat in a non-oxidative atmosphere. Examples of possible adhesives are a condensed polynuclear aromatic (COPNA) resin, a phenol resin, divinylbenzene, a furan resin, an imide resin and the like. These can be used following carbonization through heating in a non-oxidative atmosphere. Of these, the COPNA resin is excellent in terms of adhesive force and ease of handling. For this reason, the temperature can be rapidly increased without cracks, separation and wrinkles developing during carbonization following the adhesion of the carbon-based sheet. Moreover, strong adhesive force can be maintained even after use in the furnace or apparatus.

The COPNA resin is a thermosetting composition obtained by combining what is primarily a condensed polycyclic aromatic compound with a bicyclic or higher cyclic structure, an aromatic crosslinking agent comprising a monocyclic, bicyclic or higher cyclic aromatic having two or more groups of at least one kind of a hydroxymethyl group and a halomethyl group, and an acid catalyst.

The condensed polycyclic aromatic compounds mainly having a bicyclic or higher cyclic structure include, for example, one or a mixture of two or more selected from naphthalene, anthracene, phenanthrene, pyrene, chrysene, naphthacene, acenaphthene, acenaphthylene, perylene, coronene and derivatives thereof in which they form the main skeleton, coal or petroleum heavy oil, tar, pitch and the like.

The acid catalysts include one or a mixture of two or more selected from aluminum chloride, boron fluoride, sulfuric acid, phosphoric acid, an organic sulfonic acid, a carboxylic acid and derivatives thereof.

The aromatic crosslinking agents each comprising a monocyclic, bicyclic or higher cyclic aromatic having two or more groups of at least one kind of a hydroxymethyl group and a halomethyl group, include, for example, p-xylene dichloride, 1,4-benzenedimethanol (p-xylene glycol) and 9,10-anthraoenedimethanol,

The COPNA resin may contain a solvent for decreasing the softening point or a plasticizer, in addition to the above-mentioned main components. Further, coke or graphite powder may be added to improve the carbonization yield.

A method for producing the carbon-based composite member according to the invention will be shown below.

### (Application of Adhesive)

A graphite substrate processed into a shape suitable for its intended use is prepared, an adhesive is applied (coated) to a surface of this graphite substrate, and a carbon-based sheet is adhered to this adhesive The adhesive may be applied by such methods as spray coating, brush coating or dropping. The adhesive may be applied to the whole or only parts of a surface. If slits are formed before the adhesive is cured, the resin can be kept from flowing out of the slits during curing by applying the adhesive in those areas that make it possible to avoid the slits.

The coating temperature is preferably a temperature (generally, about 100°C or lower) equal to or lower than the curing initiation temperature. If an adhesive such as the COPNA resin is used, which is solid at ordinary temperatures, it is preferable to first heat the graphite substrate and the adhesive to a temperature equal to or higher than the melting point of the adhesive before coating.

(Adhesion and Curing of Adhesive)

The carbon-based sheet is adhered (joined) to the graphite substrate. Then, pressure is applied by a clamp or the like, and curing is carried out at a temperature equal to or higher than the curing temperature of the adhesive. An adhesive layer is thinned and widened by curing under pressure to enable stronger adhesion. The temperature and time necessary for curing vary depending on the kind of resin used. For example, in the case of the COPNA resin, it is necessary to carry out the treatment at 200°C for about 30 minutes.

As to how the temperature is applied up to the highest treatment temperature, in the case of the COPNA resin, which is difficult to foam, the treatment may be carried out in a temperature-controlled chamber previously heated to the treatment temperature. In the case of the phenol resin or the like, which produces large amounts of an easily foamable reaction product, the temperature during heating is preferably increased at a rate of about 2°C/hour to perform curing while maintaining a temperature (about 200°C) equal to or higher than the curing temperature of the adhesive.

(Carbonization Step)

The carbon-based composite member prepared according to the above-mentioned steps is carbonized so that no gas is generated at high temperatures at the time of use. In those cases when the generated gas does not present a hindrance, the carbon-based composite member may directly be installed in the furnace without this carbonization step. During the carbonization step, the carbon-based composite member is at least heated to a temperature equal to or higher than the temperature to which it will be exposed at the time of use in order to remove any generated gas in advance.

(Slit or Groove Formation Step)

Slits or grooves may be formed in any step, depending on their shape. If the slits are added in a plain-woven form, a twill form, a satin weave form or the like, the slits do not divide the carbon-based sheet and may therefore be added during any step.

If the grooves are formed only on the back side, this must be done before adhesion.

If the slits are formed by plural division in a lattice form, a hexagonal form or the like, the slits may be formed by cutting out the carbon-based sheet into a shape such as a square, a rectangle or a hexagon, arranging the cut-out sheet on the graphite substrate and adhering it thereto, or by adhering the carbon-based sheet to the graphite substrate, and then making cuts in a lattice form or a hexagonal form using a cutter or the like. The latter is more workable. When performed after adhesion, this step may be carried out during any step leading up to the carbonization step.

(Highly-Purifying Step)

The carbon-based composite member thus prepared is highly purified depending on its intended use. The purification treatment may be carried out using known methods. For example, the treatment can be carried out by allowing a halogen gas or a halogenated hydrocarbon gas to flow in a high-temperature furnace of about 2,000°C.

The carbon-based composite member according to the present invention can be used as a member (for example, a heat insulating tube, a heat insulating material, a tight box or a wall material) found on the inside of an apparatus or furnace such as a silicon single crystal pulling-up apparatus, a hightemperature treatment furnace, a nuclear fusion reactor, a nuclear reactor or a hot press apparatus.

For example, if the carbon-based composite member according to the present invention is used as the wall material of a nuclear fusion reactor, a nuclear reactor or the like, the carbon-based composite member is processed into a tile form, about 10 to 100 mm on a side, and then, the carbon-based composite member 10 is disposed so that the side of the carbon-based sheet 14 comes into contact with a metal wall surface 60, followed by bolting, which makes it possible to use it as wall material.

The carbon-based composite member according to the present invention will be described in more detail by means of the following examples, but is not limited to the same.

[Example 1]

A graphite substrate was prepared by processing an isotropic graphite material, ET-10 (trade name), manufactured by Ibiden Co., Ltd. into a size of 100×100×20 mm. This graphite substrate was heated at 80°C, and 10 g of a COPNA resin heated at the same temperature was applied to a surface of 100×100 mm.

The main components of the COPNA resin were p-xylene glycol, pitch and p-toluenesulfonic acid. The softening point of the COPNA resin was lowered with α-methylnaphthalene.

Then, an expanded graphite sheet, Expanded Graphité Sheet TG-411 (trade name) manufactured by GrafTech International Ltd., of 100×100×0.8 mm was adhered to the surface to which the COPNA resin had been applied. An iron plate having a thickness of 10 mm was placed thereon, and allowed to stand in a temperature-controlled chamber at 200°C for 30 minutes with the graphite substrate and the iron plate clamped to cure the COPNA resin.

Slits were then made into the expanded graphite sheet by cutting through the expanded graphite sheet in a lattice form at a distance of 50 mm.

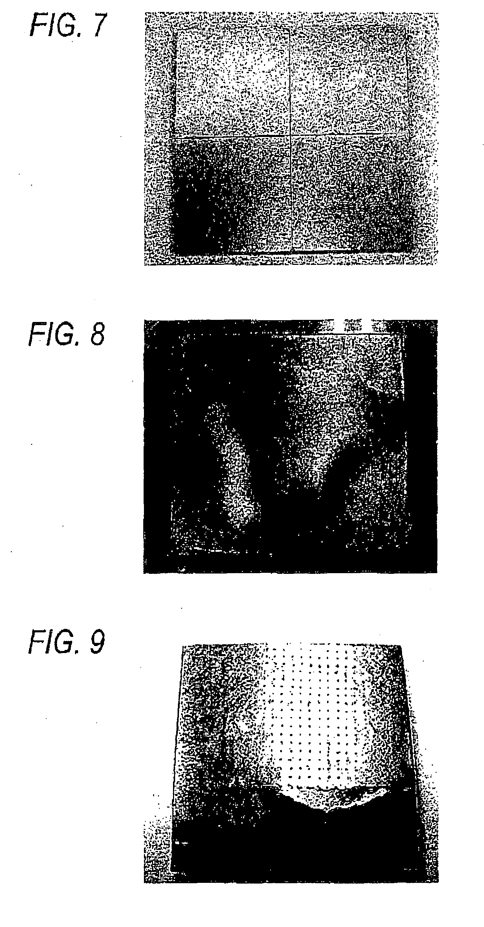

The carbon-based composite member thus formed was placed in a furnace, and treated at 2,000°C for 3 hours. Separation and the like was not observed on the surface of the carbon-based composite member when it was removed from the furnace. Then, the carbon-based composite member was pinched with a pair of test jigs of 150×150×30 mm made of an isotropic graphite material, and four corners of the test jigs were fastened with bolts made of a carbon fiber-reinforced carbon composite material. After storing it at 1,500°C for 5 hours, the carbon-based sheet was tested for separation and the like. Separation, cracks and the like were not observed even after this evaluation test. Fig. 7 shows the carbon-base composite member after the evaluation test.

[Example 2]

After the COPNA resin was applied to the graphite substrate, the expanded graphite sheet was adhered to the graphite substrate, and the COPNA resin was cured in the same manner as in Example 1.

Grooves were then formed on the expanded graphite sheet by making depressions in a lattice form at a distance of 50 mm that did not pass through the expanded graphite sheet.

The carbon-based composite member thus formed was placed in a furnace, and treated at 2,000°C for 3 hours. Separation and the like was not observed on the surface of the carbon-based composite member when it was removed from the furnace. The same evaluation test was then performed as in Example 1. Even after this evaluation test, separation, cracks and the like were not observed.

[Example 3]

The COPNA resin was applied to the graphite substrate in the same manner as described in Example 1 above.

Four expanded graphite sheets of 50×50×0,8 mm were adhered to the surface to which the COPNA resin had been applied with no space between them, An iron plate having a thickness of 10 mm was placed thereon, and allowed to stand in a temperature-controlled chamber at 200°C for 30 minutes with the graphite substrate and the iron plate clamped to cure the COPNA resin.

The carbon-based composite member thus formed was placed in a furnace and treated at 2,000°C for 3 hours. Separation and the like was not observed on the surface of the carbon-based composite member when it was removed from the furnace. Then, the same evaluation test was performed as in Example 1. Even after this evaluation test, separation, cracks and the like were not observed.

[Comparative Example 1]

After the COPNA resin was applied to the graphite substrate, the expanded graphite sheet was adhered thereto, and the COPNA resin was cured in the same manner as in Example 1. No slit or groove was formed on the expanded graphite sheet.

The carbon-based composite member thus formed was placed in a furnace and treated at 2,000°C for 3 hours. Separation was observed on the surface of the carbon-based composite member when it was removed from the furnace. The carbon-based composite member in which separation occurred is shown in Fig. 8.

[Comparative Example 2]

After the COPNA resin was applied to the graphite substrate, the expanded graphite sheet was adhered thereto, and the COPNA resin was cured in the same manner as in Example 1. Punching was then performed on the expanded gaphite sheet at intervals of 4 mm.

The carbon-based composite member thus formed was placed in a furnace and treated at 2,000°C for 3 hours. Separation was not observed on the surface of the carbon-based composite member taken out of the furnace. The same evaluation test was then performed as in Example 1. Separation was observed after this evaluation test. The carbon-based composite member in which separation occurred is shown in Fig. 9.

In the embodiments described above, either slits or grooves are formed on the carbon-based sheet. However, the invention is not limited to this. Both slits and grooves may be formed on the carbon-based sheet.

## Claims

1. A carbon-based composite material comprising:
a graphite substrate; and
a carbon-based sheet adhered to a surface of the graphite substrate with a heat-resistant adhesive,
wherein at least one of (i) slits and (ii) grooves are formed on the carbon-based sheet.

2. The carbon-based composite material according to claim 1, wherein the maximum linear distance between each of the slits or grooves is 80 mm or less.

3. The carbon-based composite material according to claim 1 or 2, wherein the slits or grooves are formed in a lattice pattern.

4. The carbon-based composite material according to any one of claims 1 to 3,
wherein the carbon-based sheet includes an expanded graphite sheet.

5. The carbon-based composite material according to any one of claims 1 to 4,
wherein the adhesive includes a COPNA resin.

6. A producing method of a carbon-based composite material, the method comprising:
preparing a graphite substrate;
applying a heat-resistant adhesive to a surface of the graphite substrate;
joining a carbon-based sheet to the graphite substrate on which the heat-resistant adhesive was applied; and
forming at least one of (i) slits and (ii) grooves on the carbon-based sheet.

7. The producing method according to claim 6, wherein the forming step is performed before the joining step.

8. The producing method according to claim 6, wherein the forming step is performed after the joining step.

9. The producing method according to claim 6, wherein the carbon-based sheet includes a plurality of carbon-based sheets, the slits are formed between the carbon-based sheets when the carbon-based sheets are joined to the graphite substrate.

10. The producing method according to any one of claims 6 to 9, further comprising the carbonization of the joined graphite substrate and the carbon-based sheet.

## Patentansprüche

1. Auf Kohlenstoff basierendes Kompositmaterial, umfassend:
ein Graphitsubstrat; und
eine auf Kohlenstoff basierende Folie, die mit einem wärmebeständigen Klebemittel an eine Oberfläche des Graphitsubstrats angehaftet ist,
worin zumindest eines von (i) Schlitzen und (ii) Vertiefungen auf der auf Kohlenstoff basierenden Folie gebildet ist.

2. Auf Kohlenstoff basierendes Kompositmaterial gemäss Anspruch 1, worin der maximale lineare Abstand zwischen jedem der Schlitze oder der Vertiefungen 80 mm oder weniger beträgt.

3. Auf Kohlenstoff basierendes Kompositmaterial gemäss Anspruch 1 oder 2, worin die Schlitze oder Vertiefungen in einem Gittermuster angeordnet sind.

4. Auf Kohlenstoff basierendes Kompositmaterial gemäss irgendeinem der Ansprüche 1 bis 3, worin die auf Kohlenstoff basierende Folie eine expandierte Graphitfolie umfasst.

5. Auf Kohlenstoff basierendes Kompositmaterial gemäss irgendeinem der Ansprüche 1 bis 4, worin das Klebemittel ein COPNA-Harz umfasst.

6. Herstellungsverfahren für ein auf Kohlenstoff basierendes Kompositmaterial, wobei das Verfahren umfasst:
Herstellen eines Graphitsubstrats;
Aufbringen eines wärmebeständigen Klebemittels auf eine Oberfläche des Graphitsubstrats;
Verbinden einer auf Kohlenstoff basierenden Folie mit dem Graphitsubstrat, auf das das wärmebeständige Klebemittel aufgetragen worden ist; und
Bilden von zumindest einem von (i) Schlitzen und (ii) Vertiefungen auf der auf Kohlenstoff basierenden Folie.

7. Herstellungsverfahren gemäss Anspruch 6, worin der Bildungsschritt vor dem Verbindungsschritt durchgeführt wird.

8. Herstellungsverfahren gemäss Anspruch 6, worin der Bildungsschritt nach dem Verbindungsschritt durchgeführt wird.

9. Herstellungsverfahren gemäss Anspruch 6, worin die auf Kohlenstoff basierende Folie eine Vielzahl von auf Kohlenstoff basierenden Folien umfasst und die Schlitze zwischen den auf Kohlenstoff basierenden Folien gebildet werden, wenn die auf Kohlenstoff basierenden Folien mit dem Graphitsubstrat verbunden werden.

10. Herstellungsverfahren gemäss irgendeinem der Ansprüche 6 bis 9, ferner umfassend das Carbonisieren des verbundenen Graphitsubstrats und der auf Kohlenstoff basierenden Folie.

## Revendications

1. Matériau composite à base de carbone, qui comprend :
un substrat en graphite ; et
une feuille à base de carbone collée à la surface du substrat en graphite avec un adhésif thermorésistant,
(i) des fentes et/ou (ii) des sillons étant formés sur la feuille à base de carbone.

2. Matériau composite à base de carbone selon la revendication 1, dans lequel la distance linéaire maximale entre chacune des fentes ou chacun des sillons est de 80 mm ou moins.

3. Matériau composite à base de carbone selon la revendication 1 ou 2, dans lequel les fentes ou les sillons sont formés en un motif à croisillons.

4. Matériau composite à base de carbone selon l'une quelconque des revendications 1 à 3, dans lequel la feuille à base de carbone comprend une feuille de graphite expansée.

5. Matériau composite à base de carbone selon l'une quelconque des revendications 1 à 4, dans lequel l'adhésif comprend une résine COPNA.

6. Procédé de production d'un matériau composite à base de carbone, le procédé comprenant :
la préparation d'un substrat en graphite;
l'application d'un adhésif thermorésistant à la surface du substrat en graphite ;
la jonction d'une feuille à base de carbone au substrat en graphite sur lequel l'adhésif thermorésistant a été appliqué ; et
la formation de (i) fentes et/ou (ii) sillons sur la feuille à base de carbone.

7. Procédé de production selon la revendication 6, dans lequel l'étape de formation est réalisée avant l'étape de jonction.

8. Procédé de production selon la revendication 6, dans lequel l'étape de formation est réalisée après l'étape de jonction.

9. Procédé de production selon la revendication 6, dans lequel la feuille à base de carbone comprend une pluralité de feuilles à base de carbone, les fentes sont formées entre les feuilles à base de carbone lorsque les feuilles à base de carbone sont jointes au substrat en graphite.

10. Procédé de production selon l'une quelconque des revendications 6 à 9, qui comprend en outre la carbonisation du substrat en graphite joint et de la feuille à base de carbone.
